(19) Europäisches Patentamt
European Patent Office
Office européen des brevets

(11) **EP 2 350 194 B1**

(12) **FASCICULE DE BREVET EUROPEEN**

(45) Date de publication et mention
de la délivrance du brevet:
**04.07.2018 Bulletin 2018/27**

(21) Numéro de dépôt: **09759941.9**

(22) Date de dépôt: **24.11.2009**

(51) Int Cl.:
**C08L 77/06** *(2006.01)*     **C08J 5/08** *(2006.01)*
**C08L 77/02** *(2006.01)*     **C08K 7/14** *(2006.01)*

(86) Numéro de dépôt international:
**PCT/EP2009/065726**

(87) Numéro de publication internationale:
**WO 2010/058024 (27.05.2010 Gazette 2010/21)**

(54) **COMPOSITION POLYMERE THERMOPLASTIQUE A BASE DE POLYAMIDE**

POLYAMIDHALTIGE THERMOPLASTISCHE POLYMERZUSAMMENSETZUNG

THERMOPLASTIC POLYMER COMPOSITION CONTAINING POLYAMIDE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.11.2008 FR 0806578**

(43) Date de publication de la demande:
**03.08.2011 Bulletin 2011/31**

(73) Titulaire: **Rhodia Opérations**
**93306 Aubervilliers (FR)**

(72) Inventeurs:
• **AMICI, Marco**
**I-06131 Perugia (IT)**
• **GUAITA, Cesare**
**I-21049 Tradate (IT)**

(74) Mandataire: **Schuck, Alexander et al**
**Isenbruck Bösl Hörschler LLP**
**Patentanwälte**
**EASTSITE ONE**
**Seckenheimer Landstraße 4**
**68163 Mannheim (DE)**

(56) Documents cités:
**EP-A- 0 355 547     FR-A- 2 913 023**

**Description**

La présente invention concerne une composition polymère thermoplastique à base de polyamide, présentant un excellent compromis de propriétés, notamment de propriétés mécaniques et une haute fluidité en fondu. L'invention concerne notamment une composition comprenant au moins un polyamide linéaire de haute fluidité et éventuellement des charges, telles que des fibres de verre; ainsi qu'un procédé pour la fabrication d'une telle composition.

**ART ANTERIEUR**

Parmi les propriétés que l'on cherche souvent à contrôler pour un matériau thermoplastique destiné à être mis en forme par des techniques telles que l'injection, l'injection-gaz, l'extrusion, l'extrusion-soufflage, on cite la rigidité, la résistance aux chocs, la stabilité dimensionnelle, en particulier à température relativement élevée, le faible retrait après mise en forme, l'aptitude à la mise en peinture par différents procédés, l'aspect de surface, la densité. Ces propriétés peuvent être contrôlées, dans certaines limites, par le choix d'un polymère ou par l'adjonction au polymère de composés de différentes natures. Dans ce dernier cas, on parle de compositions polymères. Le choix d'un matériau pour une application donnée est généralement guidé par le niveau de performance exigé vis à vis de certaines propriétés et par son coût. Le polyamide est par exemple un matériau largement utilisé, notamment dans le domaine de l'industrie automobile. On cherche toujours de nouveaux matériaux susceptibles de répondre à un cahier des charges en terme de performance et/ou de coût.

FR 2 913 023 décrit une composition polyamide comprenant au moins un polyamide de type 66 et un agent modificateur du choc comprenant des groupements fonctionnels réactifs avec ce polyamide, et un procédé pour la fabrication d'une telle composition.

On cherche notamment des compositions polyamides présentant un excellent compromis de fluidité en fondu, pour leur facilité lors de la mise en oeuvre, et de propriétés mécaniques, permettant ainsi la réalisation d'articles résistants aux chocs notamment.

**INVENTION**

La demanderesse a mis en évidence des compositions polyamides présentant une fluidité en fondu augmentée et des propriétés mécaniques équivalentes ou supérieures, par rapport aux compositions polyamides classiques, et permettant la réalisation d'articles ayant un excellent aspect de surface. Il apparaît de plus que ces compositions sont faciles à mettre en oeuvre dans les procédés de mise en forme d'intérêt, notamment le moulage par injection avec des temps de cycle accélérés.

L'invention a ainsi pour objet une composition obtenue par mélange d'au moins :

a) un (co)polyamide a) de type 66 ayant un Mn compris entre 8000 et 18000 g/mol ;
b) 5 à 20 % en poids de (co)polyamide b) de type 6, par rapport au poids total du mélange de (co)polyamide a) et (co)polyamide b), ledit (co)polyamide b) ayant un Mn compris entre 18000 et 40000 g/mol ; et
c) 0 à 90 % en poids, par rapport au poids total de la composition, de charges de renfort ;

le rapport des viscosités en solution, mesurées selon la norme ISO 307 dans de l'acide formique, avec une concentration de grammes par litre, à une temperature de 25°C, du (co)polyamide a) par rapport au (co)polyamide b) est compris entre 0,3 et 0,8 ;

ladite composition présentant une viscosité apparente en phase fondue, en Pa.s, selon les relations suivantes :

$$\eta 100 \leq 8(X) + 100$$

$$\eta 1000 \leq 3(X) + 90$$

dans lesquelles $\eta$ est la viscosité apparente en phase fondue de la composition polyamide mesurée à une température de 275°C ; soit à un taux de cisaillement de 100 s$^{-1}$, $\eta 100$, soit à un taux de cisaillement de 1000 s$^{-1}$, $\eta 1000$ ; et X correspond à la proportion en poids de charges de renfort, par rapport au poids total de la composition ;

- la viscosité apparente en phase fondue est mesurée selon la norme ISO 11443 et la masse moléculaire moyenne en nombre Mn est calculée en partant de l'analyse des groupements terminaux.

La composition comprend préférentiellement une matrice polyamide uniquement constituée des (co)polyamides a) et b).

## DEFINITIONS

La masse moléculaire moyenne en nombre Mn est définie selon la formule suivante :

$$M_n = \frac{\sum_i n_i M_i}{\sum_i n_i}$$

où $n_i$ est le nombre de molécules avec poids moléculaire correspondant $M_i$.

La valeur de Mn absolue peut être mesurée par chromatographie à exclusion stérique (SEC), couplée à la diffraction de la lumière, ou calculé en partant de l'analyse des groupements terminaux en utilisant la procédure détaillée dans le Nylon Plastics Handbook, écrit par Melvin I. Kohan, Hanser Publisher, année 1995, pages 42 et suivantes, et page 78 et suivantes.

La viscosité en solution peut être mesurée selon la norme ISO 307, en solution d'acide formique, avec une concentration de 5 grammes par litre, à une température de 25 °C, à l'aide d'un viscosimètre SCHOTT AVS 360.

La viscosité apparente en phase fondue de la composition polyamide selon la présente invention est mesurée selon la norme ISO 11443, notamment en utilisant un rhéomètre capillaire Göttfert Rheograph 2002. On peut par exemple utiliser un capillaire de longueur 30 mm et de diamètre 1 mm, avec un piston ayant un diamètre de 12 mm ; et par exemple procéder à la mesure avec des échantillons ayant une humidité résiduelle égale à la teneur en eau à l'équilibre de chaque polyamide.

## INVENTION DETAILLE

Le (co)polyamide a) est un polyamide thermoplastique du type 66, c'est-à-dire un polyamide obtenu au moins à partir d'acide adipique et d'hexaméthylène diamine ou de leur sel tel que l'adipate d'hexaméthylènediamine, pouvant éventuellement comprendre d'autres monomères de polyamide.

On entend notamment par (co)polyamide de type 66, un (co)polyamide comprenant au moins 80 % en moles, préférentiellement au moins 90 % en moles de résidus de monomères d'acide adipique et d'hexaméthylène diamine.

Le (co)polyamide a) selon l'invention présente un Mn compris entre 8000 et 18000 g/mol, préférentiellement entre 10000 et 16000 g/mol et plus préférentiellement entre 12000 et 15000 g/mol.

La polymérisation du polyamide de l'invention est notamment réalisée selon les conditions opératoires classiques de polymérisation des polyamides, de manière continue ou discontinue.

Un tel procédé de polymérisation peut comprendre brièvement :

- un chauffage sous agitation et sous pression du mélange des monomères et composés multifonctionnels (i) et monofonctionnels (ii),
- un maintien du mélange sous pression et température pendant une durée déterminée, avec élimination de vapeur d'eau par un dispositif approprié, puis décompression et maintien pendant une durée déterminée à une température supérieure au point de fusion du mélange, notamment sous pression autogène de vapeur d'eau, sous azote ou sous vide, pour ainsi continuer la polymérisation par élimination de l'eau formée.

En sortie de polymérisation, le polymère peut être refroidi avantageusement par de l'eau, et extrudé sous forme de joncs. Ces joncs sont coupés pour produire des granulés.

Selon l'invention, le polyamide peut être fabriqué par ajout en polymérisation, notamment au début de la polymérisation, des monomères du polyamide 66, en présence en outre de composés difonctionnels et/ou monofonctionnels. Ces composés difonctionnels et/ou monofonctionnels présentent des fonctions amines ou acides carboxyliques capable de réagir avec les monomères du polyamide. Les composés difonctionnels peuvent présenter la même fonctionnalité amine ou acide carboxylique. Les fonctions amine peuvent être des fonctions amines primaires et/ou secondaire. Le (co)polyamide a) de l'invention peut présenter une structure linéaire ou branchée.

Les composés difonctionnels et/ou monofonctionnels utilisés sont des agents modifiant la longueur de chaînes des polyamides et permettant notamment d'obtenir des polyamides ayant un indice de fluidité en fondu supérieur ou égal à 10 g/10 min. selon la norme ISO1133 mesuré à une température de 275°C avec une charge de 325 g, préférentiellement entre 10 et 50 g/10 min., plus préférentiellement entre 15 et 50 g/10 min et encore plus préférentiellement entre 20 et 40 g/10 min.

On peut utiliser au début, en cours ou en fin de polymérisation tout type d'acides mono- ou di-carboxylique, aliphatiques ou aromatiques ou tout types d'amines mono- ou di-amines, aliphatiques ou aromatiques. On peut notamment utiliser comme composé monofonctionnel la n-dodécylamine et la 4-amino-2,2,6,6-tétraméthylpipéridine, l'acide acétique, l'acide laurique, la benzylamine, l'acide benzoïque et l'acide propionique . On peut notamment utiliser comme composé difonctionnel, l'acide adipique, l'acide téréphtalique, l'acide isophtalique, l'acide sébacique, l'acide azélaïque, l'acide dodécanedioïque, l'acide décanedioïque, l'acide pimélique, l'acide subérique, les dimères d'acides gras, la di(β-éthylcarboxy) cyclohexanone, l'hexaméthylène diamine, la méthyl-5 pentaméthylène diamine, la métaxylylène diamine, la butanediamine, l'isophorone diamine, le 1,4 diamino cyclohexane, la 3,3',5-triméthyl hexaméthylènediamine.

On peut également utiliser un excès d'acide adipique ou un excès d'hexaméthylène diamine pour la production d'un polyamide de type 66 présentant une fluidité en fondu élevée.

Préférentiellement, la proportion en groupements terminaux acides est différente de la proportion en groupement terminaux aminés, notamment au moins deux fois supérieure ou inférieure. Les quantités de groupements terminaux amines (GTA) et/ou acides (GTC) sont déterminées par dosages potentiométriques après dissolution du polyamide.

Le (co)polyamide b) est un polyamide thermoplastique du type 6, c'est-à-dire un polyamide obtenu au moins à partir de caprolactame, pouvant éventuellement comprendre d'autres monomères de polyamide.

On entend notamment par (co)polyamide b) de type 6, un (co)polyamide comprenant au moins 80 % en moles, préférentiellement au moins 90 % en moles de résidus de monomères de caprolactame.

Le (co)polyamide b) selon l'invention présente un Mn compris entre 18000 et 40000 g/mol, préférentiellement entre 25000 et 30000 g/mol.

Le (co)polyamide b) peut être obtenu notamment par ajout en polymérisation, en plus du caprolactame, des composés difonctionnels et/ou monofonctionnels mentionnés précédemment. Le (co)polyamide b) de l'invention peut présenter une structure linéaire ou branchée.

Le rapport des viscosités en solution, mesurées selon la norme ISO 307 dans de l'acide formique, du (co)polyamide a) par rapport au (co)polyamide b) est préférentiellement compris entre 0,5 et 0,6.

Comme charge de renfort c), on peut citer notamment celles choisies dans le groupe comprenant les charges fibreuses telles que les fibres de verre, les fibres de carbone, les fibres naturelles, les nanotubes et/ou les charges non fibreuses. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 μm. Ces charges peuvent présenter un ensimage surfacique qui assure l'adhésion mécanique entre les fibres et la matrice polyamide, notamment en condition environnementale critique, tel que par exemple, en contact avec les fluides des moteurs.

La composition peut notamment comprendre de 20 à 60 % en poids de charge de renfort, par rapport au poids total de la composition.

La composition peut comprendre, outre les polyamides mentionnés précédemment, un ou plusieurs autres polymères, de préférence polyamides ou copolyamides.

La présente invention concerne également un procédé de fabrication d'une composition polyamide dans lequel on mélange le (co)polyamide a) et le (co)polyamide b) comme indiqué précédemment. Notamment on peut mélanger le (co)polyamide a) et le (co)polyamide b) comme indiqué précédemment, et éventuellement de 0 à 90 % en poids, par rapport au poids total de la composition, de charges de renfort ; puis on met en fusion ledit mélange.

La composition polyamide selon la présente invention peut être réalisée de manière tout a fait usuelle, d'une manière semblable à la réalisation de compositions thermoplastiques classique. On procède à plus ou moins haute température, à plus ou moins haute force de cisaillement selon la nature des différents composés. Les composés peuvent être introduits simultanément ou successivement. On utilise généralement un dispositif d'extrusion dans lequel la matière est chauffée, soumise à une force de cisaillement, et véhiculée. De tels dispositifs sont parfaitement connus de l'homme du métier.

Selon un premier mode de réalisation, on mélange tous les composés en phase fondue au cours d'une unique opération, par exemple au cours d'une opération d'extrusion. On peut par exemple procéder à un mélange de granulés des matériaux polymériques, les introduire dans le dispositif d'extrusion afin de les fondre et de les soumettre à un cisaillement plus ou moins important.

On peut, selon des modes de réalisations particuliers, effectuer des prémélanges, en fondu ou non, de certains des composés avant préparation de la composition finale.

La composition selon l'invention, lorsqu'elle est préparée à l'aide d'un dispositif d'extrusion est de préférence conditionnée sous forme de granulés. Les granulés sont destinés à être mis en forme à l'aide de procédés impliquant une fusion pour l'obtention d'articles. Les articles sont ainsi constitués de la composition. Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de mise en forme, notamment de moulage par injection.

Les (co)polyamides a) et b) peuvent notamment être mélangés à l'état fondu, avec à un cisaillement plus ou moins important, notamment dans une extrudeuse. Les (co)polyamides a) et b) peuvent aussi être mélangés à froid, notamment dans un mélangeur mécanique, pour ensuite être mis à l'état fondu en même temps.

La matrice polyamide finale résultant du mélange des polyamides a) et b) présente préférentiellement un Mn compris entre 9000 et 25000 g/mol, plus préférentiellement entre 10000 et 22000 g/mol.

On préfère notamment une composition présentant une viscosité apparente en phase fondue, en Pa.s, selon les relations suivantes :

$$\eta 100 \leq 9(X) + 20$$

$$\eta 1000 \leq 3(X) + 60$$

La composition selon l'invention peut en outre comprendre des additifs usuellement utilisés pour la fabrication de compositions polyamides. Ainsi, on peut citer les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

Ces charges et additifs peuvent être ajoutés au polyamide modifié par des moyens usuels adaptés à chaque charge ou additif, tel que par exemple lors de la polymérisation ou en mélange en fondu.

La composition selon l'invention peut être utilisée pour tout procédé de mise en forme des matières plastiques, tels que par exemple le procédé de moulage par injection. La présente invention concerne ainsi aussi un procédé de moulage par injection dans lequel on introduit dans un dispositif de moulage par injection une composition selon l'invention et l'on procède au moulage.

L'utilisation des compositions selon l'invention est particulièrement intéressante dans le cadre de la fabrication d'articles pour l'industrie automobile ou électrique, en particulier pour le moulage des pièces fines, de grandes tailles et/ou à la géométrie complexe, tels que par exemple des ailes de voitures ou des disjoncteurs.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

## PARTIE EXPERIMENTALE

Les composés utilisés sont les suivants :

- PA1: Polyamide 66 ayant un MFI de 4,5 g/10 minutes (selon la norme ISO1133 mesuré à 275°C sous 325 g de charge) et un IV de 140 ml/g (selon la norme ISO 307). Teneurs en groupements terminaux suivants : GTA = 40 meq/kg, GTC = 70 meq/kg. Mn = 18200 g/mol (calculé en partant des valeurs des groupements terminaux).
- PA2 : Polyamide 66 ayant un MFI de 20 g/10 minutes et un IV de 105 ml/g. Teneurs en groupements terminaux suivants : GTA = 37 meq/kg, GTC = 95 meq/kg. Obtenu par ajout en début de polymérisation de 0,4% molaire d'acide acétique. Mn = 12500 g/mol (calculé en partant des valeurs des groupements terminaux).
- PA3 : Polyamide 6 ayant un MFI de 7 g/10 minutes et un IV de 150 ml/g. Teneurs en groupements terminaux suivants : GTC = 39 meq/kg, GTA = 51 meq/kg. Mn = 22200 g/mol (calculé en partant des valeurs des groupements terminaux).
- PA4 : Polyamide 6 ayant un MFI de 2 g/10 minutes et un IV de 200 ml/g. Teneurs en groupements terminaux suivants : GTC = 41 meq/kg, GTA = 40 meq/kg. Mn = 25000 g/mol (calculé en partant des valeurs des groupements terminaux).
- Fibres de verre : Vetrotex 995
- Additifs : cire EBS, et nigrosine vendu sous la dénomination 54/1033 par la société Ferroplast, ainsi que des stabilisants CuI et KI.

Les compositions sont préparées par mélange en phase fondue, à l'aide d'une extrudeuse bi-vis de type WERNER et PFLEIDERER ZSK, des polyamides, de 30 % en poids de fibres de verre, et de 1,5 % en poids d'additifs. Les conditions d'extrusion sont les suivantes : Température: entre 240 et 280°C, Vitesse de rotation: entre 200 et 300 tours/min, Débit entre 25 et 60 kg/heure.

L'analyse de rhéomètre capillaire a été effectué selon la norme ISO 11443 sur les granulés secs à l'aide d'un rhéomètre GÖTTFERT RHEOGRAPH 2002, avec notamment un transducteur de 1000 bar, capillaire type Roundhole 30mm x 1mm en diamètre, avec un piston de 12 mm en diamètre et vitesse (mm/sec) : 0,01 ; 0,02 ; 0,05 ; 0,1 ; 0,2 ; 0,5 ; 1,0 ; 2,0 ; 5,0.

Le taux de cendre est mesuré selon la norme ISO 3451/1A 30 min à 750°C.

La résistance à traction est mesuré selon la norme ISO 527. La résistance aux chocs Charpy non entaillé est mesuré selon la norme ISO 179/1eU.

Le test spiral permet de quantifier la fluidité des compositions en mettant en fusion les granulés et en les injectant dans un moule en forme de spirale de section rectangulaire, d'épaisseur 2 mm et de largeur 4 cm, dans une presse BM-Biraghi 85T à une température de fourreau de 275°C, une température de moule de 80°C et avec une pression d'injection maximale de 130 bar hydrauliques, ce qui correspond à un temps d'injection d'environ 0,4 secondes. Le résultat est exprimé en longueur de moule rempli correctement par la composition.

Les résultats sont mentionnés dans le Tableau 1 :

**Tableau 1**

| COMPOSITIONS | C1 | C2 | 1 | 2 |
|---|---|---|---|---|
| PA 1 | 68,5 | - | - | - |
| PA 2 | - | 68,5 | 61,5 | 61,5 |
| PA 3 | - | - | 7 | - |
| PA 4 | - | - | - | 7 |
| Additifs | 1,5 | 1,5 | 1,5 | 1,5 |
| Fibres de verre | 30 | 30 | 30 | 30 |
| Total | 100 | 100 | 100 | 100 |
| Taux de cendre (%) | 29,9 | 30,0 | 30,2 | 30,0 |
| Rapport viscosité PA66/PA6 | // | // | 0,70 | 0,52 |
| | | | | |
| IV ISO 307 (ml/g) | 145 | 116 | 117 | 117 |
| | | | | |
| Charpy entaillé (KJ/m$^2$) | 10,9 | 11,2 | 11,2 | 11,2 |
| Charpy non entaillé (KJ/m$^2$) | 79,5 | 61,5 | 69,4 | 74,2 |
| Résistance traction (N/mm$^2$) | 192 | 186 | 190 | 190 |
| Allongement à la traction (%) | 3,4 | 2,7 | 3,1 | 3,1 |
| Module de traction (N/mm$^2$) | 9820 | 9450 | 9920 | 10200 |
| $\eta(100\ s^{-1})$ | 510 | 293 | 283 | 262 |
| $\eta(1000\ s^{-1})$ | 242 | 132 | 140 | 145 |
| Test spirale (cm) | 27 | 39 | 39 | 39 |
| Aspect de surface | moyen | bon | bon | bon |

Les essais C1 et C2 sont utilisés à titre de comparaison.

On remarque de manière tout a fait inattendue que les essais 1 et 2 selon l'invention présentent un bien meilleurs compromis de propriétés rhéologiques et mécaniques par rapport aux compositions standard C1 et à l'essai comparatif C2.

**Revendications**

1. Composition obtenue par mélange d'au moins :

   a) un (co)polyamide a) de type 66 ayant un Mn compris entre 8000 et 18000 g/mol ;
   b) 5 à 20 % en poids de (co)polyamide b) de type 6, par rapport au poids total du mélange de (co)polyamide a) et (co)polyamide b), ledit (co)polyamide b) ayant un Mn compris entre 18000 et 40000 g/mol ; et
   c) 0 à 90 % en poids, par rapport au poids total de la composition, de charges de renfort ;

   - le rapport des viscosités en solution, mesurées selon la norme ISO 307 dans de l'acide formique, avec une concentration de 5 grammes par litre, à une temperature de 25°C, du (co)polyamide a) par rapport au (co)polyamide b) est compris entre 0,3 et 0,8 ;
   - ladite composition présentant une viscosité apparente en phase fondue, en Pa. s, selon les relations suivantes :

$$\eta 100 \leq 8(X) + 100$$

$$\eta 1000 \leq 3(X) + 90$$

   dans lesquelles $\eta$ est la viscosité apparente en phase fondue de la composition polyamide mesurée à une température de 275°C ; soit à un taux de cisaillement de 100 s$^{-1}$, $\eta$100, soit à un taux de cisaillement de 1000 s$^{-1}$, $\eta$ 1000 ; et X correspond à la proportion en poids de charges de renfort, par rapport au poids total de la composition ;
   - la viscosité apparente en phase fondue est mesurée selon la norme ISO11443 et la masse moléculaire moyenne en nombre Mn est calculée en partant de l'analyse des groupements terminaux.

2. Composition selon la revendication 1, **caractérisée en ce que** le (co)polyamide a) présente un Mn compris entre 10000 et 16000 g/mol.

3. Composition selon la revendication 1 ou 2, **caractérisée en ce que** le (co)polyamide b) présente un Mn compris entre 25000 et 30000 g/mol.

4. Composition selon l'une quelconque des revendications précédentes, **caractérisée en ce que** le rapport des viscosités en solution, mesurées selon la norme ISO 307 dans de l'acide formique, du (co)polyamide a) par rapport au (co)polyamide b) est comprise entre 0,5 et 0,6.

5. Composition selon l'une quelconque des revendications précédentes, **caractérisée en ce que** les charge de renfort c), sont choisies dans le groupe constitué par : les charges fibreuses telles que les fibres de verre, les fibres de carbone, les fibres naturelles, les nanotubes et/ou les charges non fibreuses telles que les charges particulaires, lamellaires et/ou les nanocharges exfoliables ou non exfoliables comme l'alumine, le noir de carbone, les argiles, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que des particules de diméthacrylates, les billes de verre ou de la poudre de verre.

6. Composition selon l'une quelconque des revendications précédentes, **caractérisée en ce que** la composition comprend de 20 à 60 % en poids de charge de renfort, par rapport au poids total de la composition.

7. Composition selon l'une quelconque des revendications précédentes, **caractérisée en ce que** ladite composition comprend en outre un ou plusieurs additifs choisis dans le groupe constitué par : les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, et les additifs d'aide au moulage.

8. Composition selon l'une quelconque des revendications précédentes, **caractérisée en ce que** la matrice polyamide finale résultante du mélange des polyamides a) et b) présente un Mn compris entre 9000 et 25000 g/mol.

9. Procédé de fabrication d'une composition selon l'une quelconque des revendications précédentes par mélange d'au moins le (co)polyamide a) et le (co)polyamide b).

10. Article obtenu par mise en forme de la composition selon l'une quelconque des revendications précédentes.

11. Procédé de moulage par injection dans lequel on introduit dans un dispositif de moulage par injection une composition selon l'une quelconque des revendications 1 à 8 et l'on procède au moulage.

**Patentansprüche**

1. Zusammensetzung, die erhalten wird durch Mischen von zumindest:

   a) einem (Co)polyamid a) vom Typ 66 mit einer Mn zwischen 8000 und 18.000 g/mol;
   b) 5 bis 20 Gewichts-% (Co)polyamid b) vom Typ 6, bezogen auf das Gesamtgewicht der Mischung aus (Co)polyamid a) und (Co)polyamid b), wobei das (Co)polyamid b) eine Mn zwischen 18.000 und 40.000 g/mol aufweist; und
   c) 0 bis 90 Gewichts-% Verstärkungsfüllstoffen, bezogen auf das Gesamtgewicht der Zusammensetzung;

   - wobei das Viskositätsverhältnis des (Co)polyamids a) zum (Co)polyamid b) in Lösung, gemessen nach der Norm ISO 307 in Methansäure, mit einer Konzentration von 5 Gramm pro Liter, bei einer Temperatur von 25 °C zwischen 0,3 und 0,8 liegt;
   - wobei die Zusammensetzung eine scheinbare Viskosität in der Schmelzphase in Pa·s gemäß den folgenden Beziehungen aufweist:

$$\eta 100 \leq 8(X) + 100$$

$$\eta 1000 \leq 3(X) + 90$$

   wobei $\eta$ die scheinbare Viskosität der Polyamidzusammensetzung in der Schmelzphase ist, gemessen bei einer Temperatur von 275 °C; entweder bei einer Scherrate von 100 s$^{-1}$, $\eta 100$, oder bei einer Scherrate von 1000 s$^{-1}$, $\eta 1000$; und X dem Gewichtsverhältnis der Verstärkungsfüllstoffe zum Gesamtgewicht der Zusammensetzung entspricht;
   - die scheinbare Viskosität in der Schmelzphase gemäß der Norm ISO 11443 gemessen wird und die zahlenmittlere molare Masse Mn ausgehend von der Analyse der Endgruppen berechnet wird.

2. Zusammensetzung nach Anspruch 1, **dadurch gekennzeichnet, dass** das (Co)polyamid a) eine Mn zwischen 10.000 und 16.000 g/mol aufweist.

3. Zusammensetzung nach Anspruch 1 oder 2, **dadurch gekennzeichnet, dass** das (Co)polyamid b) eine Mn zwischen 25.000 und 30.000 g/mol aufweist.

4. Zusammensetzung nach einem der vorhergehenden Ansprüche, **dadurch gekennzeichnet, dass** das Viskositätsverhältnis des (Co)polyamids a) zum (Co)polyamid b) in Lösung, gemessen nach der Norm ISO 307 in Methansäure, zwischen 0,5 und 0,6 liegt.

5. Zusammensetzung nach einem der vorhergehenden Ansprüche, **dadurch gekennzeichnet, dass** die Verstärkungsfüllstoffe c) ausgewählt sind aus der Gruppe bestehend aus: Faserfüllstoffen wie Glasfasern, Kohlenstofffasern, natürlichen Fasern, Nanoröhrchen und/oder nicht fasrigen Füllstoffen wie partikelförmigen, lamellenartigen Füllstoffen und/oder in Schichten aufspaltbaren oder nicht in Schichten aufspaltbaren Nanofüllstoffen wie Aluminiumoxid, Ruß, Tonen, Montmorilloniten, Zirconiumphosphat, Kaolin, Calciumcarbonat, Diatomeenerden, Graphit, Glimmer, Siliciumdioxid, Titandioxid, Zeolithen, Talk, Wollastonit, polymeren Füllstoffen wie Dimethacrylatpartikeln, Glaskugeln oder Glaspulver.

6. Zusammensetzung nach einem der vorhergehenden Ansprüche, **dadurch gekennzeichnet, dass** die Zusammensetzung bezogen auf das Gesamtgewicht der Zusammensetzung 20 bis 60 Gewichts-% Verstärkungsfüllstoffe umfasst.

**7.** Zusammensetzung nach einem der vorhergehenden Ansprüche, **dadurch gekennzeichnet, dass** die Zusammensetzung ferner einen oder mehrere Zusatzstoffe umfasst, die aus der Gruppe ausgewählt sind bestehend aus: Schmiermitteln, Flammhemmern, Weichmachern, Nukleierungsmitteln, die Schlagzähigkeit modifizierenden Mitteln, Katalysatoren, Lichtstabilisatoren und/oder Hitzestabilisatoren, Antioxidanzien, Antistatika, Farbstoffen, Mattierungsmitteln und Formungshilfsmitteln.

**8.** Zusammensetzung nach einem der vorhergehenden Ansprüche, **dadurch gekennzeichnet, dass** die sich ergebende endgültige Polyamidmatrix des Gemischs aus den Polyamiden a) und b) eine Mn zwischen 9000 und 25.000 g/mol aufweist.

**9.** Verfahren zur Herstellung einer Zusammensetzung nach einem der vorhergehenden Ansprüche durch Mischen von zumindest (Co)polyamid a) und (Co)polyamid b).

**10.** Artikel, der durch Formgebung der Zusammensetzung nach einem der vorhergehenden Ansprüche erhalten ist.

**11.** Verfahren zum Spritzgießen, in dem eine Zusammensetzung nach einem der Ansprüche 1 bis 8 in eine Spritzgießvorrichtung eingebracht wird und die Formung erfolgt.

**Claims**

**1.** Composition obtained by blending at least:

a) a (co)polyamide a) of type 66 having an Mn of between 8000 and 18 000 g/mol;
b) 5% to 20% by weight of (co)polyamide b) of type 6, relative to the total weight of the blend of (co)polyamide a) and (co)polyamide b), said (co)polyamide b) having an Mn of between 18 000 and 40 000 g/mol; and
c) 0% to 90% by weight, relative to the total weight of the composition, of reinforcing fillers;

- the ratio of the viscosities in solution, measured according to Standard ISO 307 in formic acid, with a concentration of 5 grams per litre, at a temperature of 25°C, of the (co)polyamide a) relative to the (co)polyamide b) being between 0.3 and 0.8;
- said composition having an apparent melt viscosity, in Pa.s, according to the following relationships:

$$\eta 100 \leq 8(X) + 100$$

$$\eta 1000 \leq 3(X) + 90$$

in which $\eta$ is the apparent melt viscosity of the polyamide composition measured at a temperature of 275°C; either at a shear rate of 100 s$^{-1}$, $\eta 100$, or at a shear rate of 1000 s$^{-1}$, $\eta 1000$; and X corresponds to the proportion by weight of reinforcing fillers, relative to the total weight of the composition;
- the apparent melt viscosity being measured according to Standard ISO 11443 and the number-average molecular weight Mn being calculated on the basis of analysis of the end groups.

**2.** Composition according to Claim 1, **characterized in that** the (co)polyamide a) has an Mn of between 10 000 and 16 000 g/mol.

**3.** Composition according to Claim 1 or 2, **characterized in that** the (co)polyamide b) has an Mn of between 25 000 and 30 000 g/mol.

**4.** Composition according to any one of the preceding claims, **characterized in that** the ratio of the viscosities in solution, measured according to Standard ISO 307 in formic acid, of the (co)polyamide a) relative to the (co)polyamide b) is between 0.5 and 0.6.

**5.** Composition according to any one of the preceding claims, **characterized in that** the reinforcing fillers c) are selected from the group consisting of: fibrous fillers, such as glass fibers, carbon fibers, natural fibers or nanotubes, and/or non-fibrous fillers, such as particulate fillers, lamellar fillers and/or exfoliable or nonexfoliable nanofillers such as alumina, carbon black, clays, montmorillonites, zirconium phosphate, kaolin, calcium carbonate, diatomaceous earths, graphite, mica, silica, titanium diodixe, zeolites, talc, wollastonite, polymeric fillers such as dimethacrylate particles, glass beads or glass powder.

6. Composition according to any one of the preceding claims, **characterized in that** the composition comprises from 20% to 60% by weight of reinforcing filler, relative to the total weight of the composition.

7. Composition according to any one of the preceding claims, **characterized in that** said composition also comprises one or more additives selected from the group consisting of: lubricants, flame retardants, plasticizers, nucleating agents, impact modifiers, catalysts, light stabilizers and/or heat stabilizers, antioxidants, antistatic agents, dyes, mattifying agents and molding aids.

8. Composition according to any one of the preceding claims, **characterized in that** the resulting final polyamide matrix of the blend of the polyamides a) and b) has an Mn of between 9000 and 25 000 g/mol.

9. Process for the production of a composition according to any one of the preceding claims, by blending at least the (co)polyamide a) and the (co)polyamide b).

10. Article obtained by forming of the composition according to any one of the preceding claims.

11. Injection-moulding process in which a composition according to any one of Claims 1 to 8 is introduced into an injection-moulding device and the moulding operation is carried out.

EP 2 350 194 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2913023


**Littérature non-brevet citée dans la description**

- **MELVIN I. KOHAN.** Nylon Plastics Handbook. Hanser Publisher, 1995, 42